# EUROPÄISCHE PATENTSCHRIFT

(11) **EP 2 234 494 B1**
(45) Veröffentlichungstag und Bekanntmachung des Hinweises auf die Patenterteilung: **25.12.2013**
(21) Anmeldenummer: 08858735.7
(22) Anmeldetag: 29.10.2008
(51) Int. Cl.: A01N 55/00, A01N 55/10, A01N 59/00, A01N 25/34, A01N 25/04, A01N 43/16, A01N 31/16, A01N 57/12, A01P 3/00, A01P 21/00, A01G 7/06, B27K 5/00

(54) **SCHUTZSCHICHT FÜR PLANZEN UND BÄUME, DEREN HERSTELLUNG UND VERWENDUNG**
PROTECTIVE LAYER FOR PLANTS AND TREES, THE PRODUCTION THEREOF AND USE THEREOF
COUCHE DE PROTECTION POUR PLANTES ET ARBRES, FABRICATION ET UTILISATION

(30) Priorität: 12.12.2007 DE 102007060320
(43) Veröffentlichungstag der Anmeldung: 06.10.2010
(73) Patentinhaber: Stiftung Nano Innovations, 4600 Olten (CH)
(72) Erfinder: SCHWINDT, Sascha, 66117 Saarbrücken (DE)
(74) Vertreter: FDST Patentanwälte
(86) Internationale Anmeldenummer: PCT/DE2008/001753
(87) Internationale Veröffentlichungsnummer: WO 2009/074124

(56) Entgegenhaltungen:
- EP-A1- 1 826 248
- EP-A2- 0 747 184
- EP-A2- 1 825 752
- WO-A1-98/38848
- US-A1- 2003 203 980
- DATABASE WPI Week 200226 Thomson Scientific, London, GB; AN 2002-196458 XP002579664 & CN 1 319 338 A (ZHANG F) 31. Oktober 2001 (2001-10-31)

## Beschreibung

### Gegenstand der Erfindung

Die Erfindung betrifft die Verwendung einer Zusammensetzung zur Beschichtung von Samen und/oder Keimlingen von Pflanzen sowie mit einer entsprechend hergestellten Schutzschicht beschichtete Samen und/oder Keimlinge.

### Hintergrund der Erfindung

Jährlich entstehen der Landwirtschaft weltweit Schäden in Milliardenhöhe durch Pflanzenschädlinge, wie z.B. Pilze oder Fraßschädlinge, die die Blätter der Nutzpflanzen befallen und schädigen. Bisher wurden diese Pflanzenschädlinge durch Pflanzenschutzmittel bekämpft, die laut Pflanzenschutzmittelverzeichnis (Bundesamt für Verbraucherschutz und Lebensmittelsicherheit, Stand 01.11.2007) zu den Bereichen
Herbizide gegen Unkräuter,
Insektizide gegen Schadinsekten,
Fungizide gegen pilzliche Krankheitserreger,
Rodentizide gegen Nagetiere,
Nematizide gegen Nematoden (Fadenwürmer),
Akarizide gegen Milben/Spinnentiere,
Molluskizide gegen Schnecken,
Bakterizide gegen Bakterien,
Mittel gegen Viroide,
Mittel gegen Viren,
Mittel für die Rebveredelung und Veredelung an Obst- und Ziergehölzen,
Mittel zur Verhütung von Wildschäden,
Mittel zum Wundverschluss / Wundbehandlung,
Wachstumsregler,
Mittel zur Behandlung von Saat- und Pflanzgut und
Mittel zur Bodenentseuchung gehören. Allen Mitteln und Substanzen ist gemein, dass sie entweder die zu schützende Pflanze zu geeigneten Abwehrmaßnahmen anregen oder die Schädlinge abtöten.

Das Pflanzenblatt ist neben der Sprossachse und der Wurzel eines der drei Grundorgane der höheren Pflanzen und wird als Organtyp Phyllom genannt. Blätter sind seitliche Auswüchse an den Knoten (Nodi) der Sprossachse. Die ursprünglichen Funktionen der Blätter sind Photosynthese (Aufbau organischer Stoffe mit Hilfe von Licht) und Transpiration (Wasserverdunstung, wichtig für Nährstoffaufnahme und -transport). Blätter treten nur bei Sprosspflanzen auf, das heißt bei famartigen Pflanzen (Pteridophyta) und Samenpflanzen (Spermatophyta). Dagegen fehlen sie bei Moosen und Algen, an deren Phallus allerdings blattähnliche Gebilde auftreten können, die jedoch nur als Analogien der Blätter zu betrachten sind. Der Reichtum an Blattformen ist enorm. In einigen Fällen entstanden im Laufe der Evolution auch Blattorgane, die mit der ursprünglichen Funktion des Blattes, nämlich der Photosynthese und Transpiration, nichts mehr zu tun haben: zum Beispiel Blütenblätter, Blattdomen und Blattranken, sowie Knospenschuppen.

Das Blatt schließt nach außen mit einem Abschlussgewebe, der Epidermis, ab, die aus nur einer Zellschicht besteht. Die Epidermis besitzt nach außen eine wasser-undurchlässige Wachsschicht Cuticula, die eine unregulierte Verdunstung verhindert. Die Zellen der Epidermis besitzen in der Regel keine Chloroplasten (die Zellbestandteile, in denen die Photosynthese stattfindet). Ausnahmen davon sind die Epidermis von Hygro-, Helo- und Hydrophyten und teilweise Schattenblätter, besonders aber die Schließzellen der Spaltöffnungen (Stomata), die immer Chloroplasten enthalten. Die Stomata dienen der Regulation des Gäsaustausches, primär der Wasserdampfabgabe. Nach der Verteilung der Stomata unterscheidet man hypostomatische (Stomata auf der Blattunterseite, häufigste Form), amphistomatische (Stomata auf beiden Blattseiten) und epistomatische Blätter (Stomata auf der Blattoberseite, z. B. bei Schwimmblättern). Die von der Epidermis gebildeten Anhänge werden Haare (Trichome) genannt. Sind an der Bildung auch subepidermale Zellschichten beteiligt, spricht man von Emergenzen: Beispiele sind Stacheln oder Drüsenzotten. Als Mesophyll bezeichnet man das Assimilationsgewebe. Es ist meist in das unter der oberen Epidermis gelegene Palisadenparenchym und das darunter gelegene Schwammparenchym gegliedert. Das Palisadenparenchym besteht aus ein bis drei Lagen langgestreckter, senkrecht zur Blattoberfläche stehender, chloroplastenreicher Zellen. Im Palisadenparenchym, dessen Hauptaufgabe die Photosynthese ist, befinden sich rund 80 Prozent aller Chloroplasten. Das Schwammparenchym besteht aus unregelmäßig geformten Zellen, die aufgrund ihrer Form große Inter-zellularräume bilden. Die Hauptaufgabe des Schwammparenchyms ist es, die Durchlüftung des parenchymatischen Gewebes zu gewährleisten. Die Zellen sind relativ arm an Chloroplasten. Die Leitbündel befinden sich oft an der Grenze zwischen Palisaden- und Schwammparenchym im oberen Schwammparenchym. Der Aufbau gleicht dem der Leitbündel in der Sprossachse und ist meist kollateral. Die Leitbündel zweigen von der Sprossachse ab und gehen durch den Blattstiel ohne Drehung in die Spreite über. Dadurch weist das Xylem zur Blattoberseite, das Phloem zur Blattunterseite. Große Leitbündel sind oft von einer Endodermis umgeben, die hier Bündelscheide genannt wird. Die Bündelscheide kontrolliert den Stoffaustausch zwischen Leitbündel und Mesophyll. Die Leitbündel enden blind im Mesophyll. Dabei wird das Leitbündel immer stärker reduziert, das heißt zunächst werden die Siebröhren weniger und fallen aus, dann verbleiben im Xylem-Teil nur Schraubentracheiden, die schließlich blind enden. Das gesamte Blatt ist in der Regel so dicht mit Leitbündeln durchzogen, dass keine Blattzelle weiter als sieben Zellen von einem Leitbündel entfernt ist. Die sich daraus ergebenden kleinen Felder zwischen den Leitbündeln heißen Areolen oder Interkostalfelder. Die Funktion der Leitbündel ist der Antransport von Wasser und Mineralien ins Blatt (über das Xylem) sowie der Abtransport von Photosyntheseprodukten aus dem Blatt (über das Phloem).

Eine Beschichtung als Pflanzenblattschutzschicht muss zwei Bedingungen erfüllen. Zum einen ist eine ausreichend große Transluzenz erforderlich, um die in dem Pflanzenblatt enthaltenen Chloroplasten mit Strahlung im Bereich von 320 bis 700 nm zu versorgen. Eine in diesem Wellenlängenbereich adsorbtiv oder reflektiv wirkende Beschichtung würde die Energieversorgung der Pflanzenzelle beeinträchtigen. Im Inneren der Chlorplasten befindet sich als plasmatische Phase das Stroma. Dieses Stroma ist mit Thylakoidmembranen (Membraneinstülpungen) durchzogen, die mehrfach rollenartig übereinander gelegt das Granum bildet. Das in den Membranen als Pigment eingelagerte Chlorophyll kann nun wiederum Licht aus dem oben genannten Wellenlängenbereich adsorbieren und die aufgenommene Energie zur Produktion von ADP (Adenosintriphosphat) aus ADP (Adenosindiphosphat) und Phosphat nutzen.

Die zweite Anforderung, die eine nanoskalige Pflanzenblattschutzschicht erfüllen muss, ist die ungestörte Funktion der Stomata. Durch die Stomata (griech. Stoma, Mund) oder Spaltöffnungen erfolgt der Gasaustausch einer Pflanze. Die Stomata werden normalerweise von zwei bohnenförmigen Zellen, den Schließzellen, gebildet, die eine Öffnung, den Spalt, umschließen. Zählt man die Zellen, die um die Schließzellen herum liegen, noch hinzu, spricht man vom Spaltöffnungsapparat (stomatären Komplex). Die Poren selber sind streng genommen die eigentlichen Spaltöffnungen. Schließzellen befinden sich in der Regel in der unteren Epidermis von Pflanzenblättem, bei Gräsern auf beiden Blattseiten, und bei Schwimmblattpflanzen nur an der Oberseite. Der Gasaustausch mit der umgebenden Luft ist insbesondere für die Versorgung mit CO₂ wichtig. Kohlendioxyd wird von den Pflanzen durch die Vorgänge der Photosynthese aus der Luft aufgenommen. Damit die Diffusion durch die Zellwände optimal funktioniert, muss diese möglichst dünn bzw. durchlässig sein. Solche Zellen verdunsten aber viel Wasser, Landpflanzen würden mit solchen Blättern rasch verdorren. Über die Trennung des Interzellularraums im Blatt von der trockenen Außenluft durch die Stomata bekommt die Pflanze Kontrolle über den Wasserverlust. Weitere Punkte sind für die Stomata bedeutend: Durch die Poren findet Verdunstung (stomatäre Transpiration oder Evaporation) statt, die einen Sog erzeugt, durch den Wasser von den Wurzeln bis in die Blätter transportiert wird. Mit dem Wasser werden Nährsalze aus dem Boden geleitet und konzentrieren sich in den Blättern. Zusätzlich kühlt die Verdunstung die Blätter, diese überhitzen bei starker Sonneneinstrahlung nicht und das spezifische Temperaturoptimum der Enzyme in den Blattgeweben wird nicht überschritten. Die Transpiration allein über die Fläche der Stomata, die nur 1-2% der gesamten Blattoberfläche ausmachen, beträgt bis zu 2/3 der Evaporation, also der widerstandslosen Verdunstung, einer gleichgroßen Wasserfläche. Untersuchungen haben gezeigt, dass viele kleine Öffnungen bei gleicher Oberfläche mehr Wasser verdunsten. Der Grund ist der so genannte "Randeffekt": Moleküle am Rand eines Stomas können auch zur Seite diffundieren, während die in der Mitte sich gegenseitig behindern. Der Anteil der kutikulären Transpiration ist sehr gering, bei Hygrophyten (Pflanzen in feuchten Gebieten) mit zarten Blättern weniger als 10% der Evaporation einer freien Wasserfläche, bei Bäumen weniger als 0,5% und bei Kakteen sogar nur 0,05%.

Der Spaltöffnungsapparat besteht aus zwei Schließzellen, in der Regel bohnenförmige Zellen, die an beiden Enden aneinander haften. Zwischen ihnen ist ein Interzellularspalt, der Porus, der die Verbindung zwischen Außenluft und Atemhöhle darstellt. Bei manchen Pflanzen sind die beiden Schließzellen von spezialisierten epidermalen Zellen, den Nebenzellen (in den Abbildungen hellblau), umgeben, die an Öffnung und Verschluss der Spaltöffnung indirekt beteiligt sind. In den Nebenzellen lassen sich oft Leukoplasten erkennen. Die Schließzellen enthalten Chloroplasten, können also Photosynthese durchführen. Die Öffnungsweite des Porus ist variabel, bei Sonnenlicht und genügender Wasserzufuhr sind sie in der Regel weit geöffnet, bei Nacht oder bei Wassermangel geschlossen.

Aus der US 2003/203980 A1 ist eine Sol-Gel Zusammensetzung auf der Basis von Alkyltitanat zur Aufbringung einer nanoskaligen Schicht auf Planzen bekannt. Die Schicht schützt die die Pflanze vor schädlichen Umwelteinflüssen einschließlich Pilzbefall. Die CN 1319338 A offenbart eine wässrig-alkoholische Zusammensetzung enthaltend Ethylmetasilikat oder Tetraethoxysilan zur Aufbringung einer nanoskaligen fungistatischen Schicht auf Pflanzen wie Gemüse, Obstbäume oder Weizen. In der EP 0 747 184 A2 wird eine Behandlung von Holz mit einer Zusammensetzung vorgeschlagen, die mindestens einen SiO₂-erzeugenden Stoff enthält. In der EP 1 825 752 A2 und der EP 1 826 248 A2 sind weiterhin verschiedene Zusammensetzungen auf Basis von SiO₂ für Sol-Gel-Schichten zur Behandlung von Substraten bekannt.

### Zusammenfassung der Erfindung

Der Erfindung liegt die Aufgabe zugrunde, eine weitere Einsatzmöglichkeit nanoskaliger SiO₂ - Schutzschichten anzugeben. Die Aufgabe wird erfindungsgemäß durch eine Verwendung entsprechend den Merkmalen gemäß Anspruch 1 gelöst. Darüber hinaus wird die Aufgabe erfindungsgemäß durch Samen und/oder Keimlinge gelöst, deren Oberfläche mit einer Schutzschicht entsprechend den Merkmalen gemäß Anspruch 5 beschichtet ist.

Als Oberfläche im Sinne der Erfindung sind alle mit der Umwelt in Kontakt stehenden Pflanzenteile oder Hohlräume eines Keimlings oder eines Samens zu verstehen.

Überraschend konnte festgestellt werden, dass eine nanoskalige Barriereschicht auf der Oberfläche von Samen und/oder Keimlingen ausgebildet wird, die die oben beschriebenen physiologischen Prozesse wie Photokatalyse und Transpiration von Wasser nicht beeinträchtigt. Die angegebene Schutzschicht beeinflusst beispielsweise die Funktion des Spaltöffnungsapparates nicht, da die Schicht bei einer Schichtdicke von nur ca. 100 nm die Spaltöffnungen mit einem Durchmesser von ca. 0,015 bis 0,03 mm nicht verschließen und den Öffnungs- bzw. Schliessvorgang nicht behindern. Gleichzeitig wird verhindert, dass die Haustorien von Schimmelpilzen, wie z.B. Echter Mehltau (Schlauchpilz der Familie Erysiphaceae) durch die Barriereschicht dringen und den Pflanzensaft als Nährstoffquelle anzapfen. Pilze können auf der Schutzschicht keine Myzele bilden, die durch die Stomata in das Blattinnere eindringen und dort interzellulär das Pilzgeflecht ausbilden könnten. Fraßinsekten, die sich ebenfalls von Pflanzensäften ernähren, können mit ihren Mundwerkzeugen die Barriereschicht nicht durchdringen. Dagegen ist die erfindungsgemäße Schutzschicht uneingeschränkt durchlässig für die photosynthetisch nutzbare Strahlung im Wellenlängenbereich von 320 nm bis 700 nm, so dass die ATP-Produktion nicht eingeschränkt oder blockiert wird. Die erfindungsgemäße Schutzschicht stellt ferner keine Diffusionsbarriere dar, so dass der notwendige Gasaustausch des Pflanzenblattes durch die Stomata nicht beeinträchtigt wird. Ein weiterer Vorteil der erfindungsgemäßen Lösung liegt darin, dass für die Initiierung des auf der Oberfläche ablaufenden Sol-Gel-Prozesses keine pflanzenschädigende Aktivierungsenergie in Form von Wärmezufuhr erforderlich ist und dass eine atmosphärische Umgebungstemperatur im Bereich von 5° C bis 35 °C, vorzugsweise 10° C bis 25 °C, hinreichend ist. Das auf de Oberfläche befindliche SiO₂ steht ferner nach Absterben und Verrottung der Pflanze als Pflanzendünger zur Verfügung.

Erfindungsgemäß bevorzugt wird eine nanoskalige, atmungsaktive, organisch modifizierte Beschichtung auf der Basis von mittels eines modifizierten Sol-Gel-Prozesses erzeugtem SiO₂, mit darin eingelagerten bioziden Wirkstoffen, die Herstellung dieser Beschichtung, die Weiterverarbeitung der Beschichtung sowie ihre Verwendung als Pflanzenschutzschicht auf Samen und/oder Keimlingen.

In besonders vorteilhafter Ausgestaltung der Erfindung ist vorgesehen, dass vor dem Aufbringen des Sol-Gels auf die Pflanzenoberfläche mindestens ein antimikrobieller Wirkstoff, der vorzugsweise in einem hydrophilen Lösemittel gelöst und / oder dispergiert wurde, dem Sol zugeführt wird.

In weiterer vorteilhafter Ausgestaltung der Erfindung ist vorgesehen, dass der Precursor ausgewählt ist aus der Gruppe der Alkyltriethoxysilane und / oder der Aminopropyltriethoxysilane. Dem Precursor können bis zu 20 Gew.-% Al₂O₃, TiO₂, ZrO₂, MgO und / oder V₂O₅, bezogen auf den Gesamtanteil an SiO₂, zugefügt werden.

In besonders vorteilhafter Ausgestaltung der Erfindung ist ferner vorgesehen, dass die Bildung des Sol-Gels innerhalb von 24 Stunden bei 20° C durchgeführt wird.

Vorzugsweise erfolgt das Aufbringen des Sol-Gels auf die Oberfläche durch Kontaktieren der Oberfläche mit dem gelösten Precursor, insbesondere durch Sprühen, Tauchen, Schleudern, Streichen, Begießen, Filmbegießen und / oder Sprühbalken, insbesondere mit wenigstens einer Sprühdüse.

Zur Verstärkung der antimikrobiellen, im speziellen fungiziden Wirkung der Pflanzenschutzschicht können antimikrobielle Wirkstoffe der SiO₂-Matrix beigemischt werden. Antibakterielle bzw. antimikrobielle Wirkstoffe können zur Vernichtung bzw. Wachstumshemmung von Bakterien, Pilzen, Algen und Viren und zum Schutz gegen mikrobielle Verunreinigung eingesetzt werden. Die umgebungsbedingte, mikrobielle Kontamination durch ca. 2 bis 3 Milliarden unterschiedlicher Mikroorganismen, davon allein ca. 15.000, die sich über die Luft ausbreiten und somit nahezu jede Oberfläche besiedeln können, stellt ein stetig wachsendes gesundheitliches Gefährdungspotenzial dar. Im Folgenden wird für die Wirkung der Substanzen der Begriff "antimikrobiell" verwendet, damit ist die biozide bzw. biostatische Wirkung auf Mikroorganismen gemeint. Die Zuführung von antimikrobiellen Wirkstoffen ist aber nicht zwingend erforderlich, sondern hängt von der Art der zu erwartenden Phytopathogene ab.

Als antimikrobielle Wirkstoffe werden anorganische Chemikalien und Metallverbindungen wie z.B. Silberzeolith (Kanedo), Silbersilikat, Silbersulfonat und Silbermetall, Titanoxid, lösliches Glaspulver mit Metallionen, Eisen-Phthalocyanat, Kupfersulfonat, Zink-Pyrithion; Organosilikone wie z.B. organisches Silikon mit Ammoniumsalz: Octadecyldimethyl-(3-(trimethoxysilyl)-propyl)-ammoniumchlorid; quatemisierte Ammoniumsalze, wie z.B. Didecyldimethylammoniumchlorid, Hexadecylpyridiniumchlorid, Cetyldi-methylbenzylammoniumchlorid, Polyoxyalkyltrialkylammoniumchlorid; Tenside, wie z.B. amphoteres Tensid: Alkyldi(aminoethyl)glycin, nichtionogenes Tensid: Glycerinstearat; Guanidin wie z.B. 1 ,1-Hexamethylen-bis-5-(4-chlorphenyl)-biguanid-digluconat, Polyhexa-methylenbiguanidhydrochlorid; Phenole wie z.B. Biozol, Thymol, AlkylenbisphenolNatriumsalz, p-Chlor-m-xylenol (PCMX), 5-Chlor-2-(2,4-dichlorphenoxy)-phenol (Triclosan); Aniline wie z.B. 3,4,4-Trichlorcarbanilin, Imidazole wie z.B. 2-(4-Thiazolyl)-benzimidazol, 2-(Thiocyanomethylthio)-benzothiazol (TCMTB); Naturprodukte wie Chitosan, Propolis, Hinokitol; Kohlenhydrate wie z.B. Neomycinsulfat, Ester wie z.B. Diethyfphthalat, Parabene zum Einsatz gebracht (siehe DE1020068534 und DE1020068535).

Sol-Gel-Schichten können mittels eines Sol-Gel-Prozesses erzeugt werden. Dabei werden vorzugsweise Metalloxid-Xerogele aus SiO₂, R-SiOₙ, R₂SiOₙ, Al₂O₃, ZrO₂, TiO₂ oder deren Gemische verwendet, wobei R = H, Alkyl, Aryl, Epoxi-alkyl, Aminoalkyl- und n = 1 ,5 oder 1 sein kann. Diese Gele erhält man durch die Hydrolyse und Kondensationsreaktionen von Siliziumalkoxiden. Dabei werden die Moleküle auf Grund der während des Prozesses stattgefundenen Polymerisation miteinander verbunden. Das gesamte Volumen der Sole wird dabei polymerisiert. Die polymerisierten Siliziumoxide bilden ein SiO₂-Gel. Die fortlaufende Kondensation unter Alkoholabspaltung führt zu einem sphärischen Anwachsen der Partikel, was sich ab einer Dicke von ca. 70 nm auf Grund der Lichtstreuung an den Partikeln (Tyndall-Effekt) nachweisen läßt. Durch einen als Gelierung bezeichneten Vorgang können Sole in Gele übergehen. Die Partikel wachsen weiter, bis sie sich berühren und durch weitere Kondensation miteinander vernetzen. Letztendlich bildet sich dabei eine feste Phase aus, die mit einer flüssigen Phase durchdrungen ist. Als Gele werden formbeständige, leicht deformierbare, an Flüssigkeit reiche disperse Systeme bezeichnet, die aus einem festen, unregelmäßigen dreidimensionalen Netzwerk und einer Flüssigkeit bestehen.

Die erfindungsgemäß auf Samen und/oder Keimlingen aufgebrachte Schutzschicht umfasst eine nanoskalige SiO₂-Schicht. Diese SiO₂-Schicht weist vorzugsweise eine Dicke von 50 bis 300 nm, besonders bevorzugt zwischen 80 und 150 nm oder zwischen 120 und 250 nm, auf.

In vorteilhafter Ausgestaltung der Erfindung weist die Schutzschicht eine Elastizität von bis zu 250 % auf und macht als intakte Schutzschicht das Längenwachstum mit, um das Wachstum in der für den Befall durch Schimmelpilze und Fraßinsekten relevanten Wachstumsphase nicht zu beeinträchtigen.

Das Lösungsmittel für das Sol, welches auf der Oberfläche mittels des Sol-Gel-Prozesses die Schutzschicht ausbildet, ist vorzugsweise Wasser (H₂O).

Die SiO₂-Matrix der erfindungsgemäß verwendeten Schutzschicht kann ferner in vorteilhafter Weise auf Grund ihrer Si²⁺-Ladung durch Ionenaustauschprozesse eine antimikrobielle Wirkung haben.

Zur Funktionalisierung werden dem Sol aus Tetraethoxysilan, Trimethoxymethylsilan, oder Dimethoxydimethylsilan zum einen aliphatische und aromatische Aldehyde, Carbonsäuren oder Aminocarbonsäuren zugesetzt. Alter-nativ wird durch veränderte Substituenten am Precursor (R¹Si(OC₂Hs)₃) das SiO₂-Netzwerk organisch modifiziert. Ebenfalls wird dafür die Synthese verschiedener Alkyltriethoxysilane mit Azomethinbindung durch die Umsetzung von Aminopropyltriethoxysilan mit Benzaldehydderivaten bzw. Acetylaceton genutzt. Anorganisch-oxidische Gele werden häufig durch Umsetzung von Elementalkoxiden mit Alkohol-Wasser-Mischungen oder in reinem Wasser hergestellt. Der Alkohol dient hierbei der Erzeugung eines homogenen Reaktionsgemisches und kann durch andere protische oder aprotische Lösungsmittel ersetzt werden. Die Flexibilität und Porosität der Sol-Gel-Schichten lassen sich durch Modifikation der Rezepturen verändern. Ein höherer Anteil von R-SiOₙ und/oder R₂SiOₙ verbessert die Flexibilität der Schichten, durch die Bildung von Mischoxiden wie Al₂O₃, ZrO₂, TiO₂ kann die Abrasionsbeständigkeit und spezifische Härte verstärkt werden.

Nach einer bevorzugten Ausführungsform ist für die Zusammensetzung der vorgenannten Art der SiO₂-erzeugende Stoff ausgewählt aus
0 bis 100 Gew-%, vorzugsweise 1 bis 99 Gew-% Tetraethoxysilan,
0 bis 100 Gew-%, vorzugsweise 1 bis 99 Gew-% Trimethoxymethylsilan,
0 bis 100 Gew-%, vorzugsweise 1 bis 99 Gew-% Dimethoxydimethylsilan,
0 bis 100 Gew-%, vorzugsweise 1 bis 99 Gew-% Polydimethylsiloxan,
0 bis 100 Gew-%, vorzugsweise 1 bis 99 Gew-% Vinyltrimethoxysilan,
0 bis 100 Gew-%, vorzugsweise 1 bis 99 Gew-%
3-Aminopropyltrimethoxysilan,
0 bis 100 Gew-%, vorzugsweise 1 bis 99 Gew-%
3-Methacryloxypropyltrimethoxysilan und / oder
0 bis 100 Gew-%, vorzugsweise 1 bis 99 Gew-%
3-Glycidyloxypropyltrimethoxysilan.

Nach einer bevorzugten Ausführungsform betrifft die vorliegende Erfindung die Verwendung einer Zusammensetzung der vorgenannten Art, wobei der SiO₂-erzeugende Stoff weiterhin bis zu 20 Gew-% Al₂O₃, TiO₂, ZrO₂, MgO und /oder V₂O₅ enthält, wobei diese Zusatzstoffe in beliebigen Mischungsverhältnissen zugegen sind, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Nach einer bevorzugten Ausführungsform betrifft die vorliegende Erfindung die Verwendung einer Zusammensetzung der vorgenannten Art, wobei das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxydiphenylmethan,

3,5,6,3', 5',6'-Hexchlor-2,2'-dihydroxy-diphenylmethan, 5,5'-Dichlor-2,2'-dihydroxydiphenylsulfid, 2,4,5,2'4',S' Hexachlordihydroxy-diphenylsulfid, 3,5,3',5'-Tetrachlor-2,2'-Dihydroxy-diphenylslfid, 4,4'-Dihydroxy-2,2'dimethyl-dipeylmethan, 2'2-Dihydroxy-5',5-diphenylether oder 2,4,4Trichlor-2'-hydroxy-diphenylether.

Weiter sind dies Phenole in der SiO₂-MaWx, die bevorzugte Gruppe sind die halogenierten Dihydroxydiphenylmethane, sulfide, und -ether, die beispielsweise ausgewählt sind aus 5,5'-Dichlor-2,2'-dihydroxy-diphenylmethan (Preventol DD, Bayer AG), 3,5,3',5'-Tetrachlor-4,4'-dihydroxy-diphenylmethan (Monsanto Corporation), 3,5,6,3',5',6'-Hexchlor-2,2'-dihydroxy-diphenylmethan (Hexachlorophen), 5,5'-Dichlor-2,2'-dihydroxy-diphenylsulfid (Novex, Boehringer Mannheim), 2,4,5, 2'4',5'Hexachlor-dihydroxy-diphenylsulfid, 3,5,3',5'-Tetrachlor-2,2'-Dihydroxydiphenylsulfid (Actamer, Monsanto), 4,4'-Dihydroxy-2,2'dimethyl-diphenylmethan, 2'2-Dihydroxy-5',5-diphenylether (Unilever), 2,4,4Trichlor-2'-hydroxy-diphenylether (Irgasan DP 300, Ciba-Geigy).

Nach einer bevorzugten Ausführungsform betrifft die vorliegende Erfindung die Verwendung einer Zusammensetzung der vorgenannten Art, wobei es sich bei dem Phenol um 2,4,4Trichlor-2'-hydroxy-diphenylether handelt.

Besonders bevorzugt sind hier die halogenierten Dihydroxydiphenylmethane und hier insbesondere das 2,4,4Trichlor-2'-hydroxy-diphenylether (Triclosan), welches in vielen anderen Produkten bereits zur Anwendung kommt und auf seine Toxizität für den Menschen hinreichend untersucht ist.

Weiterhin als Wirkstoffe werden substituierte quartäre Ammoniumsalzen der alkylierten Phosphorsäure eingesetzt, deren biostatische Wirkung in zahlreichen Veröffentlichungen dokumentiert ist. Wegen der sehr guten Wasserlöslichkeit dieser Salze ist ihre Einbindung in die SiO₂-Matrix besonders vorteilhaft. Auch halogenierte quartäre Ammoniumsalze wie das Cetyltrimethylammoniumbromid, haben ihre antimikrobielle Wirkung unter Beweis gestellt und können in der SiO₂-Matrix zum Einsatz kommen.

Das Mischungsverhältnis der antimikrobiellen Wirkstoffe Chitosan, 2,4,4Trichlor-2'-hydroxy-diphenylether (Triclosan) und quartäre Ammoniumsalze in der Sole untereinander ist ebenfalls von Bedeutung. In Summe können die antimikrobiellen Wirkstoffe zwischen 0,1 Gew-% und 50 Gew-%, vorzugsweise 1 bis 20 % bezogen auf die Gesamtzusammensetzung der Sole ausmachen. Der Anteil der jeweiligen antimikrobiellen Wirkstoffe kann dabei zwischen 1 Vol-% und 98 Vol-% liegen. Durch unterschiedliche Rezepturen (Mengenanteile) kann die antimikrobielle Wirkung auf die jeweilige Schimmelpilzpopulation zum Zweck der höchsten Wirkung eingestellt werden.

Nach einer bevorzugten Ausführungsform betrifft die vorliegende Erfindung die Verwendung einer Zusammensetzung der vorgenannten Art, wobei es sich um kationischen, anionischen oder nichtionischen deacetylierten Chitosane und Chitosanderivate handelt, vorzugsweise um Trimethylchitosaniumchlorid, das Dimethyl-*N*-_{C ö/s} c-alkylchitosaniumiodid, quartäre Chitosansalze mit Anionen der Phosphorsäure, O-Carboxymethylchitin-Natriumsalze, O-Acylchitosan, *N,O-*Acylchitosan, *N-3-* Trimethylammonium-2-hydroxypropyl-chitosan und O-TEAE-Chitiniodid.

Nach einer bevorzugten Ausführungsform betrifft die vorliegenden Erfindung die Verwendung einer Zusammensetzung der vorgenannten Art, wobei die Chitosane und Chitosanderivate niedermolekulare Chitosane und Chitosanderivate sind, wobei die Molekulargewichte zwischen 1 ,0 x 10⁵ g/mol und 3,5 x 10⁶ g/mol, vorzugsweise zwischen 2,5 x 10⁵ g/mol und 9,5 x 10⁵ g/mol liegen.

Nach einer bevorzugten Ausführungsform betrifft die vorliegende Erfindung die Verwendung einer Zusammensetzung der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung die Verwendung einer Zusammensetzung der vorgenannten Art, wobei die mikrobiellen Wirkstoffe in Mischungsverhältnissen zwischen 0,1 Gew-% bis 99,9 Gew-%, vorzugsweise 1 bis 99 Gew-%, insbesondere 5 bis 95 Gew-% vorliegen.

Nach einer bevorzugten Ausführungsform betrifft die vorliegende Erfindung die Verwendung einer Zusammensetzung der vorgenannten Art, weiterhin enthaltend übliche Hilfs- und Zusatzstoffe, insbesondere saure und basische Polykondensations-Katalysatoren und / oder Flouridionen.

Die mechanische Barrierewirkung der erfindungsgemäß verwendeten Schutzschicht kann durch die Kombination verschiedener biozider Wirkstoffe wie Chitosan, 2,4,4Trichlor-2'-hydroxy-diphenylether und quartärer Ammoniumsalze verstärkt werden.

Die Erfindung betrifft daher einen Samen und/oder Keimling mit einer nanoskaligen, insbesondere 50 bis 300 nm, vorzugsweise zwischen 80 und 150 nm dicken diffundierbaren Schutzschicht, enthaltend eine organisch modifizierte poröse SiO₂-Schicht, die als Barriereschicht mittels eines SolGel-Prozesses auf der Oberfläche erzeugt wird, die von Hautorien von Schimmelpilzen und Mundwerkzeugen von Insekten nicht durchdrungen werden kann und antimikrobielle Wirkstoffe enthalten kann.

Nach einer bevorzugten Ausführungsform betrifft die vorliegende Erfindung einen Samen und/oder Keimling mit einer Schutzschicht der vorgenannten Art, wobei der antibakteriellen Wirkstoff ausgewählt ist aus wenigstens 2 Verbindungen der 3 nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und / oder substituierten quartären Ammoniumsalze der alkylierten Phosphorsäure.

Nach einer bevorzugten Ausführungsform betrifft die vorliegende Erfindung einen Samen und/oder Keimling mit einer Schutzschicht der vorgenannten Art, wobei das halogenierte Dihydroxydiphenylmethan, -sulfid und -ether ausgewählt ist aus 5,5'-Dichlor-2,2'-dihydroxy-diphenylmethan, 3,5, 3',5'-Tetrachlor-4,4'-dihydroxy-diphenylmethan, 3,5,6,3',5',6'-Hexchlor-2,2'-dihydroxy-diphenylmethan, 5,5'-Dichlor-2,2'-dihydroxy-diphenylsulfid, 2,4,5,2',4',5' Hexachlor-dihydroxy-diphenylsulfid, 3,5,3',5'-Tetrachlor-2,2'-Dihydroxy-diphenylsulfid, 4,4'-Dihydroxy-2,2'dimethyl-diphenylmethan, 2',2-Dihydroxy-5',5-diphenylether oder 2,4,4'-Trichlor-2'-hydroxy-diphenylether.

Nach einer bevorzugten Ausführungsform betrifft die vorliegende Erfindung einen Samen und/oder Keimling mit einer Schutzschicht der vorgenannten Art, wobei es sich bei dem Phenol um 2,4,4'-Trichlor-2'-hydroxy-diphenylether handelt.

Nach einer bevorzugten Ausführungsform betrifft die vorliegende Erfindung einen Samen und/oder Keimling mit einer Schutzschicht der vorgenannten Art, wobei es sich um kationischen, anionischen oder nichtionischen deacetylierten Chitosane und Chitosanderivate handelt, vorzugsweise um Trimethylchitosaniumchlorid, das -Dimethyl-*N*-alkylchitosaniumiodid, quartäre Chitosansalze mit Anionen der Phosphorsäure, O-Carboxymethylchitin-Natriumsalze, O-Acylchitosan, N, O-Acylchitosan, *N*-3-Trimethylammonium-2-hydroxypropyl-chitosan und O-TEAE-Chitiniodid.

Nach einer bevorzugten Ausführungsform betrifft die vorliegende Erfindung einen Samen und/oder Keimling mit einer Schutzschicht der vorgenannten Art, wobei die Chitosane und Chitosanderivate niedermolekulare Chitosane und Chitosanderivate sind, wobei die Molekulargewichte zwischen 1 ,0 x 10⁵ g/mol und 3,5 x 10⁶g/mol, vorzugsweise jedoch zwischen 2,5 x 10⁵ g/mol und 9,5 x 10⁵ g/mol liegen.

Nach einer bevorzugten Ausführungsform betrifft die vorliegende Erfindung einen Samen und/oder Keimling mit einer Schutzschicht der vorgenannten Art, wobei es sich um quartäre Ammoniumsalze der alkylierten Phosphorsäure handelt, wobei jeder der Alkylreste, unabhängig voneinander 1 bis 12 Kohlenstoffatome aufweist und / oder halogenierte Ammoniumsalze, vorzugsweise das Cetyltrimethylammoniumbromid, das Didecyldimethylammoniumchlorid, das Hexadecylpyridiniumchlorid und das Polyoxyalkyltrialkylammoniumchlorid.

Nach einer bevorzugten Ausführungsform betrifft die vorliegende Erfindung einen Samen und/oder Keimling mit einer Schutzschicht der vorgenannten Art, wobei die antimikrobiellen Wirkstoffe in beliebigen Mischungsverhältnissen zwischen 0,1 Gew-% und 99,9 Gew-%, vorzugsweise 1 Gew-% bis 99 Gew-% vorliegen.

Nach einer bevorzugten Ausführungsform betrifft die vorliegende Erfindung einen Samen und/oder Keimling mit einer Schutzschicht der vorgenannten Art, wobei die SiO₂-Schicht wenigstens teilweise aus R-SiOₙ, und/oder R₂-SiOₙ besteht, wobei R = H, Alkyl, Aryl-, Epoxy-alkyl- oder Aminoalkyl- und n = 1 ,5 oder größer ist.

Nach einer bevorzugten Ausführungsform betrifft die vorliegende Erfindung einen Samen und/oder Keimling mit einer Schutzschicht der vorgenannten Art, wobei die SiO₂ Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

Vorzugsweise wird durch die Bereitstellung und Auswahl eines speziellen Mengenintervalls eines SiO₂-erzeugenden Stoffs zusammen mit einem speziellen Mengenintervall spezieller Wirkstoffe und der Umsetzung zur SiO₂-Matrix eine Schutzschicht geschaffen, welche die oben genannten positiven Eigenschaften aufweist.

Überraschender Weise hat sich herausgestellt, dass die erfindungsgemäße Zusammensetzung, Beschichtung bzw. Schutzschicht das Keimverhalten und die Keimlingsentwicklung positiv beeinflusst. Die initiale Keimung, also das Erscheinen der Keimwurzel, von Samen, die mit der erfindungsgemäßen Beschichtung beschichtet bzw. mit der erfindungsgemäßen Zusammensetzung behandelt wurden, erfolgt deutlich schneller. Auch das Erreichen des Sekundärblatt-Stadiums, erfolgt bei den mit erfindungsgemäß behandelten Pflanzen bzw. Samen oder Keimlingen schneller, nicht zuletzt durch die frühere Keimung. Darüber hinaus ist die absolute Anzahl von sich entwickelnden Pflanzen im Vergleich zu Negativkontrollen signifikant erhöht.

Die Erfindung betrifft darüber hinaus insbesondere die Verwendung der erfindungsgemäßen Zusammensetzung, Beschichtung oder Schutzschicht zur Beschichtung von Samen und/oder Keimlingen von Pflanzen der Familien Vitaceae (Weinrebengewächse), Solanaceae (Nachtschattengewächse), Poaceae (Süßgräser), Cucurbitaceae (Kürbisgewächse), Rosaceae (Rosengewächse), Oleaceae (Ölbaumgewächse), Malvaceae (Malveugewächse), Ericaceae (Heidekrautgewächse), Palmaceae (Palmengewächse), Lamiaceae (Lippenblütler) und/oder Cannabeaceae (Hanfgewächse), und/oder der Gattungen Weizen (Triticum), Rogen (Seeale), Gerste (Hordeum), Reis (Oryza), Mais (Zea), Hirse (Sorghum, Panicum, Pennisetum), Hafer (Avena), Fichte (Picea), Lärche (Lanix), Kiefer (Pinus), Douglasie (Pseudotsuga), Eibe (Taxus), Tanne (Abies), Wacholder (Juniperus), Eiche (Quercus), Kastanie (Castanea), Esche (Oleaceae), Robinie (Robinia), Ulme (Ulmus), Nussbaum (Juglandaceae), Kirsche (Prunus), Birke (Betula), Erle (Alnus), Linde (Tilia), Pappel (Populus), Rotbuche (Fagus), Weide (Salix), Meranti (Shorea), Mahagoni (Meliaceae), Teak (Tectona), Balsa (Ochroma), Palisander (Dalbergia), Yellow Balau (Shorea), Bongossi (Lophira), Abachi (Triplochiton), Merbau (Intsia), Afzelia (Afzelia) und / oder Wenge (Milletia).

Die erfindungsgemäße Zusammensetzung bzw. die erfindungsgemäße Schutzschicht eignet sich also in vorteilhafter Weise insbesondere zur Stärkung von Samen und/oder Keimlingen dieser Pflanzen, insbesondere zur Erhöhung der Anzahl der Sekundärblätter und/oder zur Beschleunigung des Wachstums.

### Beispielhafte Beschreibung vorteilhafter und bevorzugter Ausführungsformen der Erfindung

### Ausführungsbeispiel 1 :

### 1. Herstellung eines wässrigen SiO₂-Solgels,

Es werden 100 ml Tetraethoxysilan, 400 ml Wasser und 200 ml- 0,01 N Salzsäure bei Umgebungstemperatur (20° C) gemischt und kontinuierlich gerührt (ca. 5 Stunden). Dabei entsteht ein wässriges SiO₂ - Solgel, mit einem Feststoffanteil von ca. 4,5 % SiO₂ mit einer mittleren Partikelgröße von 6 nm.

### 2. Herstellung eines wässrigen SiO₂-Solgels.

Es werden 40 ml Tetraethoxysilan, 40 ml Aminopropyltriethoxysilan und 20 ml 3-Methacryloxypropyltrimethoxysilan, 400 ml Wasser und 200 ml Benzoesäure bei Umgebungstemperatur (20 °C) gemischt, wobei die SiO₂-bildenden Precursor in der Reihenfolge Tetraethoxysilan, Aminopropyltriethoxysilan und 3-Methacryloxypropyltrimethoxysilan nach jeweils 3 Stunden rühren dem Lösungsmittel H₂O zugegeben werden. Anschließend wird unter Rühren die Carbonsäure titriert. Es entsteht ein wässriges SiO₂ - Solgel mit einem Feststoffanteil von ca. 6 % SiO₂ mit einer mittleren Partikelgröße von ca. 6nm.

### 3. Herstellung eines wässrigen SiO₂-Solgels,

Es werden 100 ml Tetraethoxysilan, 400 ml Wasser und 200 ml 0,01 N Salzsäure bei Umgebungstemperatur (20° C) gemischt und kontinuierlich gerührt (ca. 5 Stunden). Dabei entsteht ein wässriges SiO₂ - Solgel, mit einem Feststoffanteil von ca. 4,5 % SiO₂ mit einer mittleren Partikelgröße von 6 nm.

### Ausführungsbeispiel 2, Stimulierung der Keimlingsentwicklung:

Faser-Hanf Samen aus dem Samenhandel wurde mit destilliertem Wasser (Kontrolle) oder der erfindungsgemäßen Zusammensetzung bis zum Abtropfen besprüht. Die Samen wurden danach unter einer Laminar-flow-Sterilbank getrocknet, anschließend wurde diese Prozedur ein weiteres Mal wiederholt. Am nächsten Tag wurden die trockenen Samen in mit Anzuchterde gefüllte Kunststoff -Trays ausgesät. Dazu wurden diese ca. 5 mm tief eingedrückt und mit Erde bedeckt. Die gewässerten Trays wurden zum Feuchthalten in Kunststoffschalen bedeckt mit einer transparenten Abdeckung gehalten. Die Gewächshaustemperatur war auf 24 °C am Tag und 20 "C in der Nacht reguliert. Am 3 Tag nach Aussaat wurde die Keimung bonitiert. Boniturschlüssel war das erkennbare Vorhandensein einer Keimwurzel.

Im weiteren Verlauf des Experiments wurde über einen Zeitraum von 20 Tagen die Zahl der Keimlinge bestimmt, die das Sekundarblatt-Stadium erreichten. Als Boniturdatum wurden der 12., 15., 16., 17., 18., September und der 1. Oktober 2007 gewählt. Bei den mit der erfindungsgemäßen Zusammensetzung behandelten Pflanzen wurden nach 20 Tagen deutlich erhöhte Keimlingzahlen beobachtet, die zwischen 45 % und 86 % über der nichtbehandelten Kontrollgruppe lagen. Ebenfalls wurde die Wachstumsgeschwindigkeit der erfindungsgemäß behandelten Keimlinge deutlich verbessert. Sie lag zwischen 51 % und 234 % über der nichtbehandelten Kontrollgruppe.

Eine Beschleunigung der Keimung bzw. beschleunigte Entwicklung der Keimlinge im frühen Stadium könnte vor allem für Anbaugebiete mit vergleichsweise kurzen Vegetationsperioden von Nutzen sein.

## Patentansprüche

1. Verwendung einer Zusammensetzung, die mindestens einen SiO₂-erzeugenden Stoff enthält, zur Beschichtung von Samen und/oder Keimlingen von Pflanzen, wobei mindestens ein Sol-Gel mit nanoskaligen Partikeln durch Hydrolyse mindestens eines Precursors in Wasser gebildet und mindestens eine nanoskalige Schicht des Sol-Gels auf die Oberfläche aufgebracht wird.

2. Verwendung der Zusammensetzung nach Anspruch 1,
wobei der SiO₂-erzeugende Stoff ausgewählt ist aus
- 0 bis 100 Gew-%, vorzugsweise 1 bis 99 Gew-% Tetraethoxysilan,
- 0 bis 100 Gew-%, vorzugsweise 1 bis 99 Gew-% Trimethoxymethylsilan,
- 0 bis 100 Gew-%, vorzugsweise 1 bis 99 Gew-% Dimethoxydimethylsilan,
- 0 bis 100 Gew-%, vorzugsweise 1 bis 99 Gew-% Polydimethylsiloxan,
- 0 bis 100 Gew-%, vorzugsweise 1 bis 99 Gew-% Vinyltrimethoxysilan,
- 0 bis 100 Gew-%, vorzugsweise 1 bis 99 Gew-% 3-Aminopropyltrimethoxysilan,
- 0 bis 100 Gew-%, vorzugsweise 1 bis 99 Gew-% 3-Methacryloxypropyltrimethoxysilan und / oder
- 0 bis 100 Gew-%, vorzugsweise 1 bis 99 Gew-% 3-Glycidyloxypropyltrimethoxysilan.

3. Verwendung der Zusammensetzung nach Anspruch 1 oder 2,
wobei der SiO₂-erzeugende Stoff bis zu 20 Gew-% Al₂O₃, TiO₂, ZrO₂, MgO und /oder V₂O₅, vorzugsweise in Mischungsverhältnissen zwischen 0,1 Gew-% und 50 % Gew-% aus der Gruppe der Al₂O₃, TiO₂, ZrO₂, MgO und V₂O₅, enthält, besonders bevorzugt in Mischungsverhältnissen zwischen 1 Gew-% und 20 Gew-% aus der Gruppe der Al₂O₃, TiO₂ und ZrO₂.

4. Verwendung der Zusammensetzung nach einem der vorhergehenden Ansprüche zur Beschichtung von Samen und/oder Keimlingen von Pflanzen der Familien Vitaceae (Weinrebengewächse), Solanaceae (Nachtschattengewächse), Poaceae (Süssgräser), Cucurbitaceae (Kürbisgewächse), Rosaceae (Rosengewächse), Oleaceae (Ölbaumgewächse), Malvaceae (Malvengewächse), Ericaceae (Heidekrautgewächse), Palmaceae (Palmengewächse), Lamiaceae (Lippenblütler) und/oder Cannabeaceae (Hanfgewächse), und/oder der Gattungen Weizen (Triticum), Rogen (Seeale), Gerste (Hordeum), Reis (Oryza), Mais (Zea), Hirse (Sorghum, Panicum, Pennisetum), Hafer (Avena), Fichte (Picea), Lärche (Lanix), Kiefer (Pinus), Douglasie (Pseudotsuga), Eibe (Taxus), Tanne (Abies), Wacholder (Juniperus), Eiche (Quercus), Kastanie (Castanea), Esche (Oleaceae), Robinie (Robinia), Ulme (Ulmus), Nussbaum (Juglandaceae), Kirsche (Prunus), Birke (Betula), Erle (Alnus), Linde (Tilia), Pappel (Populus), Rotbuche (Fagus), Weide (Salix), Meranti (Shorea), Mahagoni (Meliaceae), Teak (Tectona), Balsa (Ochroma), Palisander (Dalbergia), Yellow Balau (Shorea), Bongossi (Lophira), Abachi (Triplochiton), Merbau (Intsia), Afzelia (Afzelia) und / oder Wenge (Milletia).

5. Samen und/oder Keimling, dessen Oberfläche mit einer Schutzschicht beschichtet ist, die wenigstens eine nanoskalige SiO₂-Schicht umfasst, wozu mindestens ein Sol-Gel mit nanoskaligen Partikeln durch Hydrolyse mindestens eines Precursors in Wasser gebildet und mindestens eine nanoskalige Schicht des Sol-Gels auf die Oberfläche aufgebracht ist.

6. Samen und/oder Keimling nach Anspruch 5,
wobei die SiO₂-Schicht eine Dicke von 50 bis 300 nm, vorzugsweise zwischen 80 und 150 nm oder zwischen 120 und 250 nm, aufweist.

7. Samen und/oder Keimling nach Anspruch 5 oder 6,
wobei die SiO₂-Schicht wenigstens teilweise aus R-SiOₙ, und/oder R₂-SiOₙ besteht, wobei R = H, Alkyl, Aryl-, Epoxy-alkyl oder Aminoalkyl und n = 1,5 oder grösser ist.

8. Samen und/oder Keimling nach einem der Ansprüche 5 bis 7,
wobei die SiO₂-Schicht Al₂O₃, TiO₂, ZrO₂, MgO und /oder V₂O₅ in beliebigen Mischungsverhältnissen enthält, vorzugsweise in Mischungsverhältnissen zwischen 0,1 Gew-% und 50 % Gew-% aus der Gruppe der Al₂O₃, TiO₂, ZrO₂, MgO und V₂O₅, besonders bevorzugt in Mischungsverhältnissen zwischen 1 Gew-% und 20 Gew-% aus der Gruppe der Al₂O₃, TiO₂ und ZrO₂.

9. Samen und/oder Keimling nach einem der vorhergehenden Ansprüche,
wobei die SiO₂-Schicht zusätzlich mindestens einen antimikrobiellen Wirkstoff enthält.

10. Samen und/oder Keimling nach einem der Ansprüche 5 bis 9,
wobei die SiO₂- Schicht 0,1 Gew-% bis 50 Gew-%, vorzugsweise 1 Gew-% bis 20 Gew-%, bezogen auf die Gesamtzusammensetzung, wenigstens eines antibakteriellen Wirkstoffs in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und/oder substituierten quartären Ammoniumsalzen der alkylierten Phosphorsäure enthält, wobei eine Mischung, die bis 50 Gew-% eines Chitosans, eines Chitosansalzes, eines alkylierten oder acylierten Chitosans und/oder eines vernetzten Chitosans enthält, ausgenommen ist.

11. Samen und/oder Keimlinge nach Anspruch 9 oder 10,
wobei der antibakteriellen Wirkstoff ausgewählt ist aus wenigstens zwei Verbindungen der drei nachstehenden Verbindungsklassen in Form von kationischen, anionischen oder nichtionischen deacetylierten Chitosanen und Chitosanderivaten und/oder Phenolen der Gruppe der halogenierten Dihydroxydiphenylmethane, -sulfide, und -ether und/oder substituierten quartären Ammoniumsalze der alkylierten Phosphorsäure.

12. Samen und/oder Keimling nach Anspruch 10 oder 11,
wobei das halogenierte Dihydroxydiphenylmethan, -sulfid und -ether ausgewählt ist aus 5,5'-Dichlor-2,2'-dihydroxy-diphenylmethan, 3,5,3',5'-Tetrachlor-4,4'-dihydroxydiphenylmethan, 3,5,6,3',5',6'-Hexchlor-2,2'-dihydroxy-diphenylmethan, ,5,5'- Dichlor-2,2'-dihydroxy-diphenylsulfid, 2,4,5,2'4',5' Hexachlordihydroxydiphenylsulfid, 3,5,3',5'-Tetrachlor-2,2'-Dihydroxy-diphenylsulfid, 4,4'-Dihydroxy-2,2'dimethyl-diphenylmethan, 2'2-Dihydroxy-5',5-diphenylether oder 2,4,4'Trichlor2'-hydroxy-diphenylether.

13. Samen und/oder Keimling nach einem der Ansprüche1 0 bis 12,
wobei es sich bei dem Phenol um 2,4,4'-Trichlor-2'-hydroxy-diphenylether handelt.

14. Samen und/oder Keimling nach einem der Ansprüche 10 bis 13,
wobei es sich um kationische, anionische oder nichtionische deacetylierte Chitosane und Chitosanderivate handelt, vorzugsweise um Trimethylchitosaniumchlorid, das -Dimethyl-N-_{C2bisC12}alkylchitosaniumiodid, quartäre Chitosansalze mit Anionen der Phosphorsäure, O-Carboxymethylchitin-Natriumsalze, O-Acylchitosan, N,O-Acylchitosan, N-3-Trimethylammonium-2-hydroxypropyl-chitosan und O-TEAE-Chitiniodid.

15. Samen und/oder Keimling nach einem der Ansprüche 9 bis 14,
wobei der antimikrobiellen Wirkstoff in beliebigen Mischungsverhältnissen zwischen 0,1 Gew-% und 99,9 Gew-%, vorzugsweise 1 Gew% bis 99 Gew-%, vorliegt.

## Claims

1. Use of a composition for coating of seeds and/or seedlings of plants, wherein the composition contains at least one SiO₂-producing substance, and wherein at least one sol-gel with nanoscale particles is formed by hydrolysis of at least one precursor in water and at least one nanoscale layer of the sol-gel is applied on the surface.

2. Use of a composition as claimed in claim 1, wherein the SiO₂-producing substance is selected from
- 0 to 100 wt.%, preferably 1 to 99 wt.% tetraethoxysilane,
- 0 to 100 wt.%, preferably 1 to 99 wt.% trimethoxymethylsilane,
- 0 to 100 wt.%, preferably 1 to 99 wt.% dimethoxydimethylsilane,
- 0 to 100 wt.%, preferably 1 to 99 wt.% polydimethylsiloxane,
- 0 to 100 wt.%, preferably 1 to 99 wt.% vinyltrimethoxysilane,
- 0 to 100 wt.%, preferably 1 to 99 wt.% 3-aminopropyltrimethoxysilane,
- 0 to 100 wt.%, preferably 1 to 99 wt.% 3-methacryloxypropyltrimethoxysilane and/or
- 0 to 100 wt.%, preferably 1 to 99 wt.% 3-glycidyloxypropyltrimethoxysilane.

3. Use of a composition as claimed in claim 1 or 2, wherein the SiO₂-producing substance contains up to 20 wt.% Al₂O₃, TiO₂, ZrO₂, MgO and/or V₂O₅, preferably in mixture proportions between 0.1 wt.% and 50 wt.% from the group Al₂O₃, TiO₂, ZrO₂, MgO and V₂O₅, especially preferably in mixture proportions between 1 wt.% and 20 wt.% from the group Al₂O₃, TiO₂ and ZrO₂.

4. Use of a composition as claimed in one of the preceding claims for coating of seeds and/or seedlings of plants from the families Vitaceae (grape-vine plants), Solanaceae (nightshade plants), Poaceae (grasses), Cucurbitaceae (pumpkin plants), Rosaceae (rose plants), Oleaceae (olive plants), Malvaceae (mallow plants), Ericaceae (heather plants), Palmaceae (palm), Lamiaceae (mint family) and/or Cannabeaceae (hemp plants), and the use of the composition according to the invention for coating the wood and/or the bark of trees of the genera spruce (Picea), larch (Larix), pine (Pinus), Douglas fir (Pseudotsuga), yew (Taxus), fir (Abies), juniper (Juniperus), oak (Quercus), chestnut (Castanea), ash (Oleaceae), robinia (Robinia), elm (Ulmus), walnut (Juglandaceae), cherry (Prunus), birch (Betula), alder (Alnus), lime (Tilia), poplar (Populus), beech (Fagus), willow (Salix), meranti (Shorea), mahogany (Meliaceae), teak (Tectona), balsa (Ochroma), jacaranda (Dalbergia), yellow balau (Shorea), bongossi (Lophira), obeche (Triplochiton), Bajam teak (Intsia), afzelia (Afzelia) and/or wenge (Millettia).

5. Seed and/or seedling, whose surface has been coated with a protective layer, which comprises at least a nanoscale SiO₂ layer, wherein at least one sol-gel with nanoscale particles is formed by hydrolysis of at least one precursor in water and at least one nanoscale layer of the sol-gel is applied on the surface.

6. Seed and/or seedling as claimed in claim 5, wherein the SiO₂ layer has a thickness from 50 to 300 nm, preferably between 80 and 150 nm or between 120 and 250 nm.

7. Seed and/or seedling as claimed in claim 5 or 6, wherein the SiO₂ layer consists at least partially of R-SiOₙ, and/or R₂-SiOₙ, where R = H, alkyl, aryl-, epoxy-alkyl- or aminoalkyl- and n = 1.5 or greater.

8. Seed and/or seedling as claimed in claims 5 to 7, wherein the SiO₂ layer contains Al₂O₃, TiO₂, ZrO₂, MgO and/or V₂O₅ in any mixture proportions, preferably in mixture proportions between 0.1 wt.% and 50 wt.% from the group Al₂O₃, TiO₂, ZrO₂, MgO and V₂O₅, especially preferably in mixture proportions between 1 wt.% and 20 wt.% from the group Al₂O₃, TiO₂ and ZrO₂.

9. Seed and/or seedling as claimed in one of the preceding claims, wherein the SiO₂ layer additionally contains at least an antibacterial active substance.

10. Seed and/or seedling as claimed in claims 5 to 9, wherein the SiO₂ layer contains 0.1 wt.% to 50 wt.%, preferably 1 wt.% to 20 wt.%, relative to the total composition, of at least one antibacterial active substance in the form of cationic, anionic or nonionic deacetylated chitosans and chitosan derivatives and/or phenols from the group of halogenated dihydroxydiphenylmethanes, - sulfides, and -ethers and/or substituted quaternary ammonium salts of alkylated phosphoric acid, wherein a mixture that contains up to 50 wt.% of a chitosan, of a chitosan salt, of an alkylated or acylated chitosan and/or of a crosslinked chitosan is taken out.

11. Seed and/or seedling as claimed in claim 9 or 10, wherein the antibacterial active substance is selected from at least two compounds of the three following classes of compounds in the form of cationic, anionic or nonionic deacetylated chitosans and chitosan derivatives and/or phenols from the group comprising halogenated dihydroxydiphenylmethanes, -sulfides, and -ethers and/or substituted quaternary ammonium salts of alkylated phosphoric acid.

12. Seed and/or seedling as claimed in claim 10 or 11, wherein the halogenated dihydroxydiphenylmethane, -sulfide and -ether is selected from 5,5'-dichloro-2,2'-dihydroxy-diphenylmethane, 3,5,3',5'-tetrachloro-4,4'-dihydroxydiphenylmethane, 3,5,6,3',5',6'-hexachloro-2,2'-dihydroxy-diphenylmethane, 5,5'-dichloro-2,2'-dihydroxy-diphenylsulfide, 2,4,5,2',4',5' hexachloro-dihydroxydiphenylsulfide, 3,5,3',5'-tetrachloro-2,2'-dihydroxy-diphenylsulfide, 4,4'-dihydroxy-2,2'dimethyl-dipeylmethane, 2',2-dihydroxy-5',5-diphenyl ether or 2,4,4'-trichloro-2'-hydroxy-diphenyl ether.

13. Seed and/or seedling as claimed in claims 10 to 12, wherein the phenol is 2,4,4'-trichloro-2'-hydroxy-diphenyl ether.

14. Seed and/or seedling as claimed in claims 10 to 13, wherein it relates to cationic, anionic or nonionic deacetylated chitosans and chitosan derivatives, preferably to trimethyl chitosanium chloride, -dimethyl-*N*-_{C2 to C12} alkyl chitosanium iodide, quaternary chitosan salts with anions of phosphoric acid, *O*-carboxymethylchitin-sodium salts, *O*-acylchitosan, *N,O*-acylchitosan, *N*-3-trimethylammonium-2-hydroxypropyl-chitosan and *O*-TEAE-chitin iodide.

15. Seed and/or seedling as claimed in claims 9 to 14, wherein the antimicrobial active substance is present in any mixture proportions between 0.1 wt.% and 99.9 wt.%, preferably 1 wt.% to 99 wt.%.

## Revendications

1. Utilisation d'une composition, qui contient au moins une substance générant du SiO₂, pour le revêtement de graines et/ou de germes de plantes, au moins un sol-gel présentant des particules nanométriques étant formé par hydrolyse d'au moins un précurseur dans l'eau et au moins une couche nanométrique du sol-gel étant appliquée sur la surface.

2. Utilisation de la composition selon la revendication 1, la substance générant du SiO₂ étant choisie parmi
- 0 à 100% en poids, de préférence 1 à 99% en poids de tétraéthoxysilane,
- 0 à 100% en poids, de préférence 1 à 99% en poids de triméthoxyméthylsilane,
- 0 à 100% en poids, de préférence 1 à 99% en poids de diméthoxydiméthylsilane,
- 0 à 100% en poids, de préférence 1 à 99% en poids de polydiméthylsiloxane,
- 0 à 100% en poids, de préférence 1 à 99% en poids de vinyltriméthoxysilane,
- 0 à 100% en poids, de préférence 1 à 99% en poids de 3-aminopropyltriméthoxysilane,
- 0 à 100% en poids, de préférence 1 à 99% en poids de 3-méthacryloxypropyltriméthoxysilane et/ou
- 0 à 100% en poids, de préférence 1 à 99% en poids de 3-glycidyloxypropyltriméthoxysilane.

3. Utilisation de la composition selon la revendication 1 ou 2, la substance générant du SiO₂ contenant jusqu'à 20% en poids d'Al₂O₃, de TiO₂, de ZrO₂, de MgO et/ou de V₂O₅, de préférence dans des rapports de mélange entre 0,1% en poids et 50% en poids du groupe formé par Al₂O₃, TiO₂, ZrO₂, MgO et V₂O₅, de manière particulièrement préférée dans des rapports de mélange entre 1% en poids et 20% en poids du groupe formé par Al₂O₃, TiO₂ et ZrO₂.

4. Utilisation de la composition selon l'une quelconque des revendications précédentes pour le revêtement de graines et/ou de germes de plantes des familles Vitaccae (vignes), Solanaceae (morelles), Poaceae (graminées), Cucurbitaceae (cucurbitacées), Rosaceae (rosacées), Oleaceae (oléacées), Malvaceae (malvéacées), Ericaceae (éricacées), Palmaceae (palmacées), Lamiaceae (lamiacées) et/ou Cannabeaceae (cannabinacées), et/ou des genres blé (triticum), seigle (Seeale), orge (Hordeum), riz (Oryza), maïs (Zea), millet (Sorghum, Panicum, Pennisetum), avoine (Avena), épicéa (Picea), mélèze (Lanix), pin (Pinus), douglas (Pseudotsuga), if (Taxus), sapin (Abies), genévrier (Juniperus), chêne (Quercus), marron (Castanea), frêne (Oleaceae), robinier (Robinia), orme (Ulmus), noyer (Juglandaceae), cerisier (Prunus), bouleau (Betula), aulne (Alnus), tilleul (Tilia), peuplier (Populus), hêtre (Fagus), saule (Salix), méranti (Shorea), acajou (Meliaceae), teck (Tectona), balsa (Ochroma), palissandre (Dalbergia), Yellow Balau (Shorea), bongossi (Lophira), abachi (triplochiton), merbau (Intsia), afzélia (Afzelia) et/ou wengé (Milletia).

5. Graine et/ou germe, dont la surface est revêtue d'une couche de protection qui comprend au moins une couche de SiO₂ nanométrique, au moins un sol-gel présentant des particules nanométriques étant formé par hydrolyse d'au moins un précurseur dans l'eau et au moins une couche nanométrique du sol-gel étant appliquée sur la surface.

6. Graine et/ou germe selon la revendication 5, la couche de SiO₂ présentant une épaisseur de 50 à 300 nm, de préférence entre 80 et 150 nm ou entre 120 et 250 nm.

7. Graine et/ou germe selon la revendication 5 ou 6, la couche de SiO₂ étant constituée au moins partiellement de R-SiOₙ et/ou de R₂-SiOₙ, R = H, alkyle, aryle, époxyalkyle ou aminoalkyle et n = 1,5 ou plus.

8. Graine et/ou germe selon l'une quelconque des revendications 5 à 7, la couche de SiO₂ contenant Al₂O₃, TiO₂, ZrO₂, MgO et/ou V₂O₅, dans des rapports de mélange quelconque, de préférence dans des rapports de mélange entre 0,1% en poids et 50% en poids du groupe formé par Al₂O₃, TiO₂, ZrO₂, MgO et V₂O₅, de manière particulièrement préférée dans des rapports de mélange entre 1% en poids et 20% en poids du groupe formé par Al₂O₃, TiO₂ et ZrO₂.

9. Graine et/ou germe selon l'une quelconque des revendications précédentes, la couche de SiO₂ contenant en outre au moins un substance active antimicrobienne.

10. Graine et/ou germe selon l'une quelconque des revendications 5 à 9, la couche de SiO₂ contenant 0,1% en poids à 50% en poids, de préférence 1% en poids à 20% en poids, par rapport à la composition totale, d'au moins une substance active antibactérienne sous forme de chitosanes et de dérivés de chitosane cationiques, anioniques ou non ioniques, désacétylés et/ou de phénols du groupe des dihydroxydiphénylméthanes halogénés, des sulfures de dihydroxydiphényle et des dihydroxydiphényléthers et/ou des sels d'ammonium quaternaire substitués de l'acide phosphorique alkylé, un mélange contenant 50% en poids d'un chitosane, d'un sel de chitosane, d'un chitosane alkylé ou acylé et/ou d'un chitosane réticulé, étant exclus.

11. Graine et/ou germe selon la revendication 9 ou 10, la substance active antibactérienne étant choisie parmi au moins deux composés des trois classes de composés ci-après, sous forme de chitosanes et de dérivés de chitosane cationiques, anioniques ou non ioniques, désacétylés et/ou de phénols du groupe des dihydroxydiphénylméthanes halogénés, des sulfures de dihydroxydiphényle et des dihydroxydiphényléthers et/ou des sels d'ammonium quaternaire substitués de l'acide phosphorique alkylé.

12. Graine et/ou germe selon la revendication 10 ou 11, le dihydroxydiphénylméthane halogéné, le sulfure de dihydroxydiphényle et le dihydroxydiphényléther étant choisi parmi le 5,5'-dichloro-2,2'-dihydroxydiphénylméthane, le 3,5,3',5'-tétrachloro-4,4'-dihydroxydiphénylméthane, le 3,5,6,3',5',6'-hexachloro-2,2'-dihydroxydiphénylméthane, le sulfure de 5,5'-dichloro-2,2'-dihydroxydiphényle, le sulfure de 2,4,5,2'4',5'-hexachlorodihydroxydiphényle, le sulfure de 3,5,3',5'-tétrachloro-2,2'-dihydroxydiphényle, le 4,4'-dihydroxy-2,2'diméthyldiphénylméthane, le 2'2-dihydroxy-5',5-diphényléther ou le 2,4,4'trichloro-2'-hydroxydiphényléther.

13. Graine et/ou germe selon l'une quelconque des revendications 10 à 12, où il s'agit, pour le phénol, de 2,4,4'-trichloro-2'-hydroxydiphényléther.

14. Graine et/ou germe selon l'une quelconque des revendications 10 à 13, où il s'agit de chitosanes et de dérivés de chitosane cationiques, anioniques et/ou non ioniques, désacétylés, de préférence de chlorure de triméthylchitosanium, d'iodure de diméthyl-N-C₂-C₁₂alkylchitosanium, de sels de chitosane quaternaire avec des anions de l'acide phosphorique, de sels de sodium d'O-carboxyméthylchitine, d'O-acylchitosane, de N,O-acylchitosane, de 2-hydroxypropylchitosane de N-3-triméthylammonium et d'iodure d'O-TEAE-chitine.

15. Graine et/ou germe selon l'une quelconque des revendications 9 à 14, la substance active antimicrobienne se trouvant dans des rapports de mélange quelconques entre 0,1% en poids et 99,9% en poids, de préférence de 1% en poids à 99% en poids.
